# FASCICULE DE BREVET EUROPEEN

(11) **EP 2 793 110 B1**
(45) Date de publication et mention de la délivrance du brevet: **16.09.2015**
(21) Numéro de dépôt: 14164852.7
(22) Date de dépôt: 16.04.2014
(51) Int. Cl.: G06F 3/044, G06F 3/041

(54) **Dispositif tactile multitouches a détéction capacitive multifréquence comportant des moyens de détéction de panne**
Vorrichtung zur kapazitiven Detektion von Mehrfachberührung mit Mehrfrequenztechnik und einer Einrichtung zur Fehlererkennung
Multi-touch sensing device with multi-frequency capacitive sensing comprising means for failure detection

(30) Priorité: 19.04.2013 FR 1300929
(43) Date de publication de la demande: 22.10.2014
(73) Titulaire: Thales, 92400 Courbevoie (FR)
(72) Inventeur: Coni, Philippe, 33127 ST JEAN D'ILLAC (FR); Abadie, Jean-Christophe, 33187 LE HAILLAN Cedex (FR); Sontag, Yves, 33187 LE HAILLAN Cedex (FR)
(74) Mandataire: Bréda, Jean-Marc

(56) Documents cités:
- EP-A1- 2 464 008
- EP-A1- 2 535 793
- FR-A1- 2 952 730
- US-A1- 2012 187 954
- PHILIPPE CONI ET AL: "31.2: Eliminating Ghost Touches on a Self-Capacitive Touch-Screen", SID SYMPOSIUM DIGEST OF TECHNICAL PAPERS, vol. 43, no. 1, 1 juin 2012 (2012-06-01), pages 411-414, XP055093846, ISSN: 0097-966X, DOI: 10.1002/j.2168-0159.2012.tb05803.x

## Description

Le domaine de l'invention est celui des surfaces tactiles ou « touchscreen » à détection capacitive et plus particulièrement des surfaces tactiles dites multitouches ou « multitouch » permettant la détection de deux appuis simultanés. Cette fonction est essentielle pour réaliser par exemple des « zooms » ou des rotations d'image. Le domaine plus particulier de l'invention est celui de la détection de pannes de ladite surface tactile. Cette invention peut s'appliquer dans différentes utilisations mais elle est particulièrement bien adaptée aux contraintes du domaine aéronautique et des planches de bord d'aéronef où la détection de dysfonctionnements est essentielle pour assurer la sécurité des vols.

La détection capacitive dite « projetée » consiste à réaliser une matrice de détection composée de lignes et de colonnes conductrices agencées de façon à détecter les variations locales de capacité introduites par la proximité des doigts de l'utilisateur ou de tout autre objet de désignation conducteur. La technologie dite capacitive projetée se décline en deux variantes principales qui sont :
- Détection « Self capacitive » qui consiste à lire les lignes puis les colonnes du réseau de touches de la matrice ;
- Détection dite « Mutual capacitive » consistant à lire chaque intersection du réseau de touches de la matrice ;

La technologie « Mutual capacitive » nécessite la lecture de toute la dalle. Ainsi, si la matrice comporte N lignes et M colonnes, il faut réaliser N x M acquisitions, rendant problématique la réalisation de dalles de grande taille, de haute résolution et à faible temps de réponse. De plus, la capacité à mesurer en « Mutual capacitance » est plus faible que celle obtenue en « Self capacitive », ce qui rend problématique l'usage de gants par l'utilisateur.

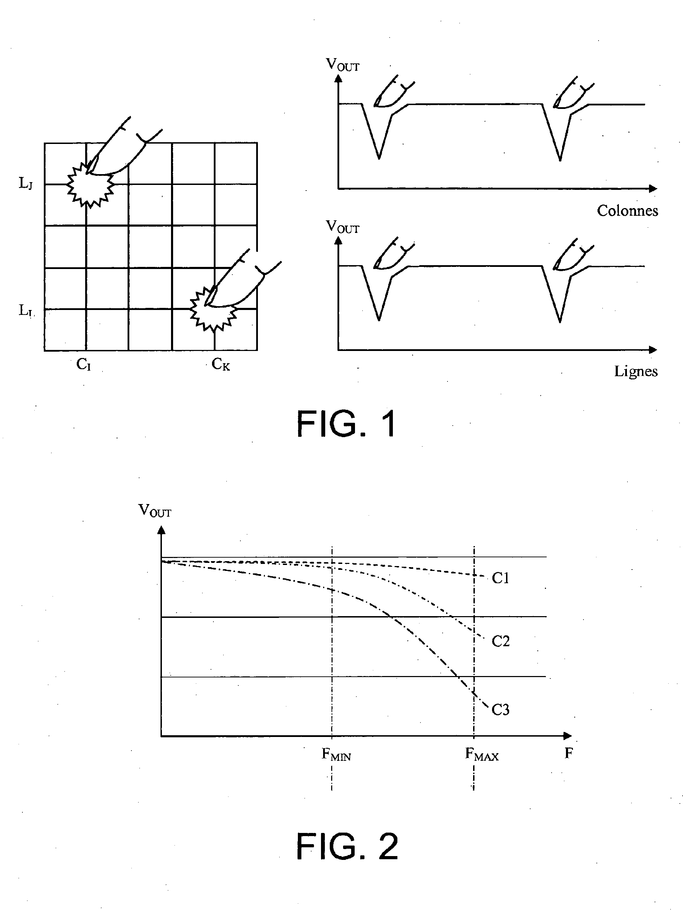

L'avantage de la détection « Self capacitive » est que, pour la dalle précédente, le système nécessite uniquement N+M acquisitions pour réaliser une lecture de la matrice. La figure 1 illustre ce principe. Sur cette figure 1, un premier doigt appuie au niveau d'une première intersection de la colonne C_{I} et de la ligne L_{J} et un second doigt appuie au niveau d'une seconde intersection de la colonne C_{K} et de la ligne L_{L}. Les tensions de sortie V_{OUT} des lignes et des colonnes présentent des baisses de niveau facilement identifiables. Les mesures des tensions autour de chaque baisse de niveau permettent d'identifier précisément les lignes et les colonnes sollicitées.

Cependant, cette dernière technique présente un inconvénient. En effet, la détection du ou des appuis est assurée à l'aide d'un réseau de lignes et de colonnes conductrices et transparentes intégrés dans un substrat de verre. La perte d'une ligne ou d'une colonne crée une zone morte inutilisable. Ce défaut est d'autant plus grave qu'il n'apparaît que lorsque l'utilisateur a besoin d'utiliser la zone morte. Il s'agit donc d'une panne dormante non détectée par le système. Sur un produit destiné à des applications grand public, telle une tablette tactile, ce défaut n'est pas nécessairement très gênant, il devient, par contre, très sérieux dans certains domaines techniques comme l'aéronautique où les exigences de fiabilité sont très importantes et dans lesquels il est essentiel d'assurer la disponibilité du système au moins jusqu'à la fin du vol ou de la mission.

Cette technique présente un autre inconvénient. Il n'est pas toujours simple d'attribuer les lignes et les colonnes détectées aux bonnes intersections réellement touchées par les doigts de l'utilisateur. Les intersections possibles mais non réellement touchées sont généralement appelées « ghosts ». Pour contrer cette dernière difficulté, la demanderesse a développé une technique consistant à réaliser un balayage de la matrice à deux fréquences d'acquisition différentes. Cette technique est décrite dans la publication « Eliminating Ghost Touches on a Self-Capacitive Touch-Screen » parue dans « SID 2012 DIGEST » de juin 2012 et dans la demande EP 2 535 793 intitulée « Dispositif tactile multicouches à détection capacitive multifréquences ».

L'objet de l'invention est de mettre en place des moyens propres à la détection de lignes ou de colonnes dans un dispositif à détection « Self capacitive » utilisant le principe du balayage de la matrice à deux fréquences d'acquisition différentes. Plus précisément, l'invention a pour objet un dispositif à écran tactile à détection capacitive projetée comprenant une dalle tactile matricielle comportant une pluralité de lignes conductrices et de colonnes conductrices, ladite dalle étant reliée à des moyens de commande électroniques générant, pour chaque ligne et pour chaque colonne conductrice, des tensions d'émission et des moyens de réception et d'analyse électroniques des tensions de réception issues de chaque ligne et de chaque colonne conductrice,
les moyens de commande électroniques générant, pour chaque ligne et pour chaque colonne conductrice, une première tension d'émission périodique émise à une première fréquence notée fréquence de travail et une seconde tension d'émission périodique émise à une seconde fréquence notée fréquence de discrimination, différente de la première fréquence :
en l'absence d'appui, la valeur de la fréquence de travail étant suffisamment faible pour provoquer de très faibles variations des tensions de réception à cette fréquence de travail et la valeur de la fréquence de discrimination étant suffisamment élevée pour provoquer des variations significatives des tensions de réception fonction des lignes et des colonnes à cette fréquence de discrimination ;
les moyens de réception étant agencés de façon à déterminer, pour chaque ligne et pour chaque colonne, la valeur d'une première tension de réception à la fréquence de travail et la valeur d'une seconde tension de réception à la fréquence de discrimination ;
caractérisé en ce que lesdits moyens d'analyse électroniques comportent :
   - une table des valeurs stockées des tensions de réception à la fréquence de travail de chaque ligne et de chaque colonne en l'absence d'appui ;
   - des moyens de comparaison établissant, pour chaque ligne et pour chaque colonne, les écarts entre les valeurs mesurées des tensions de réception et les valeurs stockées des tensions de réception de façon à déterminer si les écarts mesurés sont représentatifs d'une ligne ou d'une colonne coupée et /ou d'un appui sur une ligne ou sur une colonne intacte.

Avantageusement, les moyens d'analyse comportent des premiers moyens d'analyse agencés de façon que :
si les tensions de réception de l'ensemble des lignes présentent un « creux » représentatif d'un appui et les tensions de réception de l'ensemble des colonnes ne présentent pas de « creux » représentatif d'un appui, une colonne est diagnostiquée coupée, les positions de ladite colonne en panne et de l'appui étant déterminées par la mesure des différences de tension de réception prises à la fréquence de travail et à la fréquence de discrimination des lignes situées au niveau dudit appui ; et
si les tensions de réception de l'ensemble des colonnes présentent un « creux » représentatif d'un appui et les tensions de réception de l'ensemble des lignes ne présentent pas de « creux » représentatif d'un appui, une ligne est diagnostiquée coupée, les positions de ladite ligne en panne et de l'appui étant déterminées par la mesure des différences de tension de réception prises à la fréquence de travail et à la fréquence de discrimination des colonnes situées au niveau dudit appui.

Avantageusement, les moyens d'analyse comportent :
des seconds moyens d'analyse permettant de calculer, dans le cas de détection d'une ligne ou d'une colonne coupée, à partir des valeurs de tensions de réception à la fréquence de travail et à la fréquence de discrimination des lignes ou des colonnes situées au voisinage de la ligne ou de la colonne coupée les valeurs virtuelles de tension obtenues si la ligne ou si la colonne était intacte, lesdites valeurs virtuelles donnant des « creux virtuels » de tension ;
des troisièmes moyens d'analyse permettant de calculer le barycentre du « creux virtuel » de tension ;
des quatrièmes moyens d'analyse permettant de déterminer, à partir de la connaissance dudit barycentre, la position exacte de l'appui.

Avantageusement, la fréquence de travail est comprise entre 100 kHz et 500 kHz et en ce que la fréquence de discrimination est comprise entre 500 kHz et 5 MHz.

L'invention sera mieux comprise et d'autres avantages apparaîtront à la lecture de la description qui va suivre donnée à titre non limitatif et grâce aux figures annexées parmi lesquelles :
La figure 1 représente le fonctionnement général d'une dalle tactile « Self capacitive » dans le cas de deux appuis distincts ;
La figure 2 représente, en fonction de la fréquence appliquée, la variation du signal de sortie d'une ligne ou d'une colonne pour trois positions d'appui différentes dans un dispositif selon l'art antérieur ;
La figure 3 représente, pour deux fréquences différentes, les variations du signal de sortie d'une ligne ou d'une colonne en fonction de la position de l'appui dans un dispositif selon l'art antérieur ;
La figure 4 représente le synoptique d'un dispositif tactile capacitif projeté selon l'invention ;
La figure 5 représente la variation de la tension de sortie en l'absence d'appui et en présence d'une colonne coupée ;
La figure 6 représente le fonctionnement d'une dalle tactile « Self capacitive » dans le cas d'un appui sur une colonne coupée ;
La figure 7 représente le principe de correction des valeurs de tension d'une ligne ou d'une colonne en panne selon l'invention.

Le dispositif à écran tactile à détection capacitive projetée selon l'invention comporte un dispositif électronique à balayage de la matrice de lignes et de colonnes à deux fréquences d'acquisition différentes. Cette technique de balayage est décrite dans la publication déjà citée « Eliminating Ghost Touches on a Self-Capacitive Touch-Screen » parue dans « SID 2012 DIGEST ».

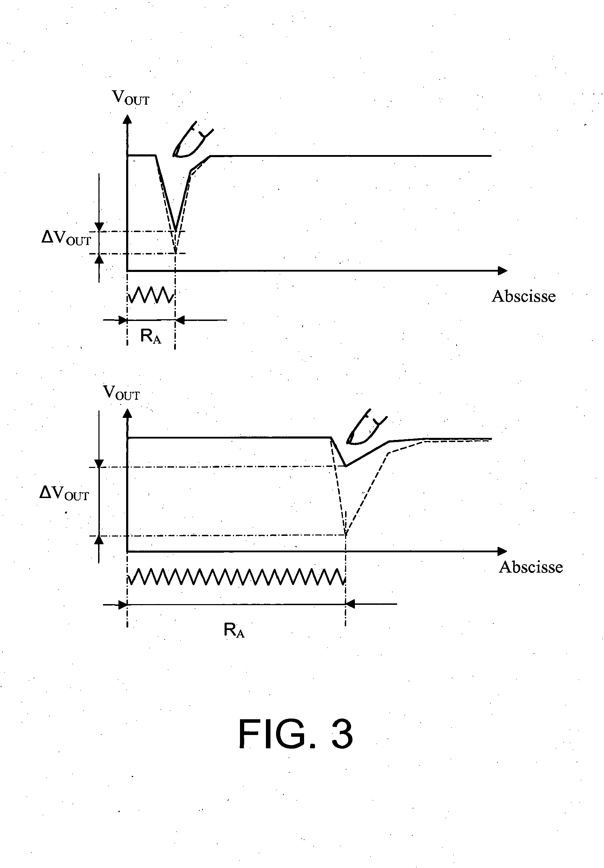

Cette technique est représentée sur les figures 2 et 3. L'écran tactile comporte un réseau de lignes L et de colonnes C conductrices. Dans ce qui suit, on entend par ligne ou colonne conductrice non seulement les lignes résistives situées sous la dalle tactile mais également les liaisons électriques qui relient ces lignes résistives aux organes électroniques de commande. Ces liaisons électriques sont montées généralement sur des circuits imprimés flexibles appelés « flex ».

Chaque ligne L et chaque colonne C a une longueur l de résistance électrique R. Il existe donc une résistance R_{A} entre une extrémité de la ligne et un point de contact A. La résistance R_{A} est inférieure à R. Cette valeur de résistance modifie la tension de sortie V_{OUT} lorsque l'on balaye la ligne ou la colonne où se produit le point de contact. On peut assimiler au premier ordre chaque ligne et chaque colonne à un réseau RC dont la résistance R associée à la capacité C_{d} du couplage entre le doigt et la matrice constitue un filtre passe bas de premier ordre. La figure 2 représente, en fonction de la fréquence appliquée, la variation du signal de sortie V_{OUT} d'une ligne pour trois positions d'appui différentes, la première courbe C1 pour un appui situé en bord de ligne, la seconde C2 pour un appui en milieu de ligne, la troisième courbe C3 pour un appui en fin de ligne. L'échelle de la figure 2 est logarithmique sur les deux axes. Il existe alors, comme on le voit sur la figure 2 une fréquence F_{MIN} telle que les variations de R_{A} provoquent une variation minimale de V_{OUT} quelque soit la position de l'appui. A l'inverse, il existe une fréquence F_{MAX} telle que les variations de R_{A} provoquent une atténuation importante de V_{OUT} en fonction de la position de l'appui. Ainsi, à cette fréquence F_{MAX}, en mesurant cette atténuation, il est alors facile de connaître la valeur de la résistance R_{A} et par conséquent, de déterminer la position du point de contact sur la ligne.

La figure 3 représente les variations du signal de sortie V_{OUT} pour les fréquences F_{MIN} et F_{MAX} le long d'une ligne conductrice en fonction de la position de l'appui. Cette figure 3 comporte deux graphiques. Le graphique du haut représente les variations en début de ligne. Le graphique du bas représente les variations du signal de sortie V_{OUT} en fin de ligne. Sur la figure 3, les courbes en traits pointillés représentent les variations du signal V_{OUT} à la fréquence F_{MAX} et les courbes en traits continus représentent les variations du signal V_{OUT} à la fréquence F_{MIN}. En mesurant V_{OUT} aux deux fréquences F_{MIN} et F_{MAX}, on obtient une information sur la valeur de la résistance R_{A} de la ligne qui permet de déterminer la position du point de contact sur la ligne et donc la colonne sollicitée, permettant une localisation complète de l'appui.

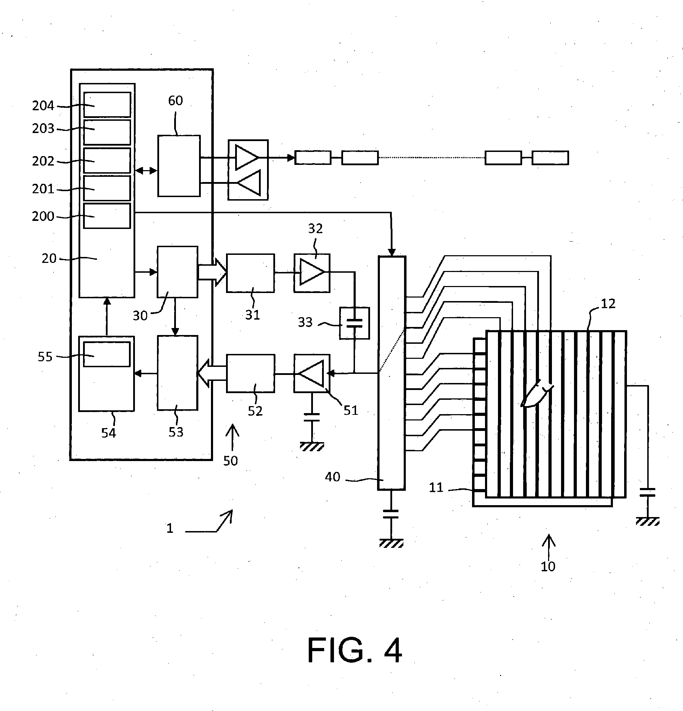

A titre d'exemple non limitatif, la figure 4 représente un dispositif 1 à dalle tactile à détection capacitive projetée. Il comprend essentiellement :
- une dalle tactile 10 comprenant un premier substrat comportant une première série de lignes conductrices 11 parallèles entre elles et un second substrat comportant une seconde série de colonnes 12 conductrices parallèles entre elles ;
- des moyens de commande et d'analyse 20 des différents signaux d'émission et de réception nécessaires au fonctionnement du dispositif tactile ;
- Un générateur 30 haute fréquence sinusoïdal à fréquence variable alimentant la dalle tactile en tensions alternatives V_{IN} par l'intermédiaire d'un convertisseur numérique-analogique « DAC » 31, d'un amplificateur 32 et d'une capacité d'injection 33. Typiquement, les fréquences sont comprises entre quelques centaines de KHz et quelques MHz ;
- Un multiplexeur 40. Il applique la tension d'entrée V_{IN} successivement à chaque colonne 12 puis à chaque ligne 11 de la dalle tactile 10 et dirige chaque tension de sortie V_{OUT} correspondant à une tension V_{IN} appliquée vers une chaîne de traitement électronique 50 ;
- Une chaîne de traitement électronique 50 qui comprend une mémoire-tampon ou « buffer » 51, un convertisseur analogique-numérique ou ADC 52, un démodulateur synchrone 53 relié au générateur de fréquences 30 et des moyens électroniques de filtrage 54. Les signaux filtrés sont envoyés aux moyens d'analyse 20 ;
- Des moyens d'émission-réception 60 ou « UART » signifiant « Universal Asynchronous Receiver Transmitter » qui assure la retransmission des signaux traités par les moyens d'analyse 20 vers l'extérieur qui est généralement un dispositif de visualisation couplé avec la dalle tactile et qui affiche des informations que l'on souhaite commander, modifier ou valider.

Le fonctionnement du dispositif est le suivant. En mode nominal, les lignes et les colonnes de la dalle sont balayées en permanence et successivement par une tension d'entrée V_{IN} à une première fréquence de travail F_{MIN} et à une seconde fréquence dite de discrimination F_{MAX}. Cette tension est générée par l'ensemble électronique composé des moyens 30, 31, 32 et 33.

En l'absence d'approche de la main, le contrôleur tactile effectue en permanence une image de la dalle à la fréquence F_{MIN} et en déduit une table au repos des impédances par moyenne glissante. Cette image est soustraite à la table 55 des valeurs instantanées des impédances, pour former la table des écarts, à partir de laquelle il est possible d'attribuer à chaque point de croisement son statut. Cette méthode est en partie décrite dans le brevet EP 0 567 364 intitulé « Process for operating a capacitive tactile keyboard ».

Lors d'un appui représenté symboliquement par un doigt sur la figure 4 et suivant la position de cet appui, il se crée une certaine capacité entre le point de contact et la masse, cette capacité étant principalement relié par une résistance de lignes et de colonnes au multiplexeur 40.

Cette composante résistive et capacitive va provoquer une variation de l'impédance totale Z du système, et agir sur le signal de sortie V_{OUT} qui vaut Z.V_{IN} avec Z=A+Bj. Le signal V_{OUT} est ensuite démodulé par la chaîne électronique 50 afin d'en extraire la valeur efficace V_{OUT}=Z.V_{IN}, avec Z=A+Bj et j=sin(2π.F.t) au moyen d'un démodulateur synchrone 53. La démodulation synchrone permet de filtrer les perturbations électromagnétiques « EMI » en agissant comme un filtre passe bande à facteur de qualité élevé, ce qui évite l'emploi de filtrages passifs peu sélectifs.

Deux mesures au moins sont effectuées, une à la fréquence de travail F_{MIN}, et une à la fréquence de discrimination F_{MAX}. On peut, pour des dalles de dimension importante, utiliser plusieurs fréquences de discrimination F_{MAX}. Avantageusement, les fréquences F_{MIN} et F_{MAX} sont modulées et démodulées séparément au moyen de deux démodulateurs synchrones 53, ce qui permet d'obtenir en une seule mesure les valeurs de la capacité C et de la résistance R, représentatives de la position de l'appui.

Enfin, le signal continu filtré issu du démodulateur 53 est filtré au moyen du filtrage 54.

Si la dalle tactile est intacte, c'est-à-dire si toutes les lignes et toutes les colonnes sont intactes, lors d'un appui simple, sa position en ligne et en colonne est calculée à partir d'un barycentre pondéré autour du signal ligne et du signal colonne de déviation maximum, le doublet de points donnant la coordonnée de l'appui.

En cas d'appuis multiples alignés, la ligne ou la colonne commune est calculée de la même manière, le triplet de points donnant les coordonnées des deux appuis.

En cas d'appuis multiples non alignés, le quadruplet de points est mesuré à la fréquence F_{MIN}, puis à la fréquence F_{MAX}. La variation du signal consécutive à la variation de fréquence est utilisée pour déterminer la rejection du ghost et le quadruplet de points permet de donner les coordonnées des différents appuis.

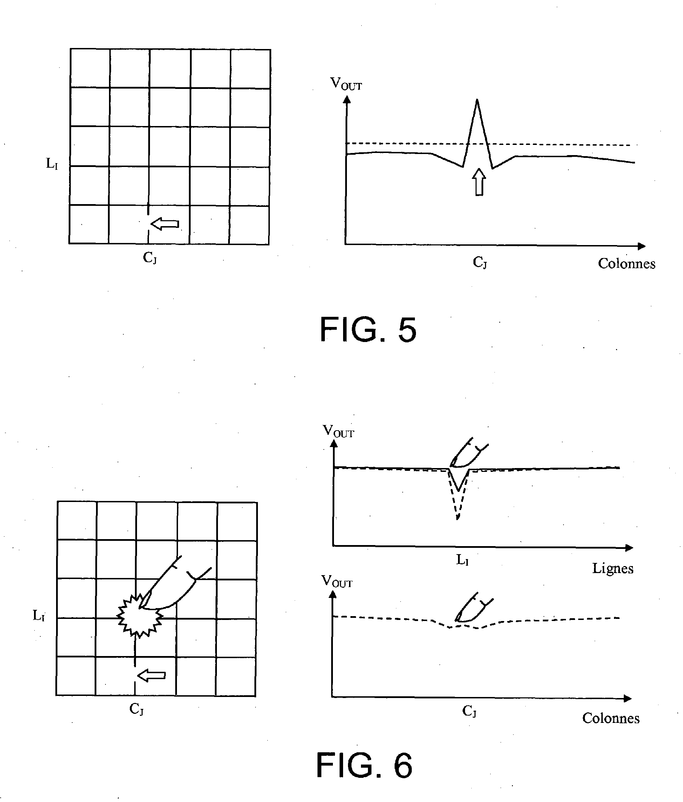

Lorsqu'une ligne ou une colonne est coupée, même en l'absence d'appui, la tension de sortie V_{OUT} au niveau de la ligne ou de la colonne coupée est perturbée dans la mesure où le couplage mutuel capacitif entre cette ligne ou cette colonne défaillante et les lignes ou les colonnes qui la croisent a disparu. La figure 5 illustre cette variation de tension. La colonne C_{J} est coupée. La tension V_{OUT} présente un pic au niveau de cette ligne. Le dispositif selon l'invention comporte des moyens de comparaison 200 établissant, pour chaque ligne et pour chaque colonne, les écarts entre les valeurs mesurées des tensions de réception et les valeurs stockées des tensions de réception dans la table 55 de façon à déterminer si les écarts mesurés sont représentatifs d'une ligne ou d'une colonne coupée. Un seuil constant peut être fixé au-delà de la valeur mémorisée afin de tenir compte des dérives et dispersions normales du signal dans le temps et du bruit de mesure. Ainsi, par ce moyen, le système détermine la ligne ou la colonne défaillante. On suppose, bien entendu, que la coupure de la ligne ou de la colonne est intervenue après le stockage des tensions de réception dans la table 55 qui est généralement effectuée avant la mise en service opérationnelle de la dalle tactile ou lors d'un test déclenché. Cette information sera ensuite confirmée lors d'un appui sur la ligne ou la colonne coupée.

Lorsqu'une ligne ou une colonne est coupée, si un appui se produit au niveau de cette ligne ou de cette colonne, la tension V_{OUT} concernée est perturbée. A titre d'exemple illustré en figure 6, l'écran comporte une dalle tactile matricielle composée de lignes conductrices C et de colonnes conductrices L. L'utilisateur pose son doigt au voisinage de l'intersection de la ligne L_{I} et de la colonne C_{I}. La colonne C_{I} est coupée et la ligne L_{I} est intacte. Dans ce cas, la tension V_{OUT} des lignes est normale et présente un creux au niveau de la ligne L_{I} comme on le voit sur la figure 6. Par contre, la colonne C_{I} étant coupée, la tension V_{OUT} des colonnes ne présente qu'une faible variation au niveau de la colonne coupée.

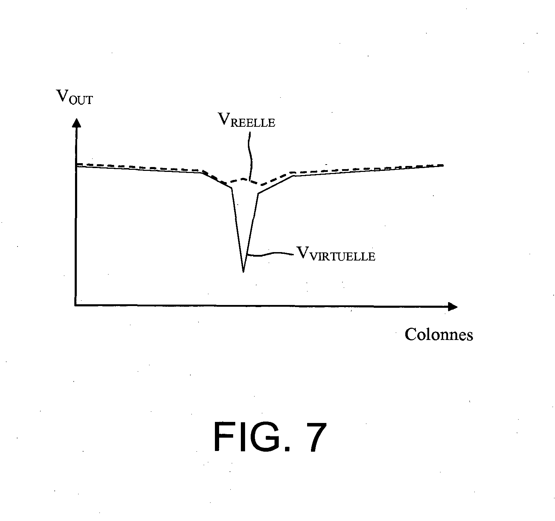

Aussi, le dispositif à écran tactile selon l'invention dispose de moyens d'analyse et de traitement numérique du signal complémentaires permettant de traiter ce problème de coupure de ligne ou de colonne. Ils sont représentés sur la figure 4 par les repères 201, 202, 203 et 204. Ils comportent essentiellement :
- des premiers moyens d'analyse 201 agencés de façon que :
   - si les tensions de réception de l'ensemble des lignes présentent un « creux » représentatif d'un appui et les tensions de réception de l'ensemble des colonnes ne présentent pas de « creux » représentatif d'un appui, une colonne est diagnostiquée coupée, les positions de ladite colonne en panne et de l'appui étant déterminées par la mesure des différences de tension de réception prises à la fréquence de travail et à la fréquence de discrimination des lignes situées au niveau dudit appui ; et
   - si les tensions de réception de l'ensemble des colonnes présentent un « creux » représentatif d'un appui et les tensions de réception de l'ensemble des lignes ne présentent pas de « creux » représentatif d'un appui, une ligne est diagnostiquée coupée, les positions de ladite ligne en panne et de l'appui étant déterminées par la mesure des différences de tension de réception prises à la fréquence de travail et à la fréquence de discrimination des colonnes situées au niveau dudit appui.
- des seconds moyens d'analyse 202 permettant de calculer, dans le cas de détection d'une ligne ou d'une colonne coupée, à partir des valeurs de tensions de réception à la fréquence de travail et à la fréquence de discrimination des lignes ou des colonnes situées au voisinage de la ligne ou de la colonne coupée les valeurs virtuelles de tension obtenues si la ligne ou si la colonne était intacte, lesdites valeurs virtuelles donnant des « creux virtuels » de tension. Cette reconstitution est basée sur la connaissance d'une part des signaux de tension délivrés par les lignes ou les colonnes situées au voisinage immédiat de la ligne ou de la colonne coupée et sur la connaissance du signal théorique engendré par un appui sur une ligne ou une colonne intacte située à l'emplacement de la ligne ou de la colonne défectueuse. La figure 7 représente le résultat de cette analyse. La courbe en traits pointillés représente les variations de la tension V_{REELLE} en présence, par exemple, d'une colonne coupée. La courbe en traits fins représente la variation « virtuelle » reconstituée de la tension V_{VIRTUELLE} des colonnes dans le cas de ladite colonne coupée ;
- des troisièmes moyens d'analyse 203 permettant de calculer le barycentre du « creux virtuel » de tension ;
- des quatrièmes moyens d'analyse 204 permettant de déterminer, à partir de la connaissance dudit barycentre, la position exacte de l'appui.

Comme on le voit, les moyens électroniques mis en oeuvre dans le dispositif tactile selon l'invention sont simples et permettent de résoudre efficacement non seulement les principaux problèmes de la détection capacitive projetée, c'est-à-dire la détection des appuis fantômes, l'insensibilité aux perturbations électromagnétiques externes due à la détection synchrone, l'absence de perturbations de l'environnement électronique par l'utilisation de signaux sinusoïdaux purs et sans harmoniques, mais également la détection des lignes coupées et la reconstitution d'un signal virtuel propre lorsque cette détection est avérée.

## Revendications

1. Dispositif à écran tactile (1) à détection capacitive projetée comprenant une dalle tactile (10) matricielle comportant une pluralité de lignes conductrices (11) et de colonnes conductrices (12), ladite dalle étant reliée à des moyens de commande électroniques (20) générant, pour chaque ligne et pour chaque colonne conductrice, des tensions d'émission (V_{IN}) et des moyens de réception et d'analyse électroniques (50) des tensions de réception (V_{OUT}) issues de chaque ligne et de chaque colonne conductrice,
les moyens de commande électroniques générant, pour chaque ligne et pour chaque colonne conductrice, une première tension d'émission périodique émise à une première fréquence (F_{MIN}) notée fréquence de travail et une seconde tension d'émission périodique émise à une seconde fréquence (F_{MAX}) notée fréquence de discrimination, différente de la première fréquence :
en l'absence d'appui, la valeur de la fréquence de travail étant suffisamment faible pour provoquer de très faibles variations des tensions de réception à cette fréquence de travail et la valeur de la fréquence de discrimination étant suffisamment élevée pour provoquer des variations significatives des tensions de réception fonction des lignes et des colonnes à cette fréquence de discrimination ;
les moyens de réception et d'analyse étant agencés de façon à déterminer, pour chaque ligne et pour chaque colonne, la valeur d'une première tension de réception à la fréquence de travail et la valeur d'une seconde tension de réception à la fréquence de discrimination ;
lesdits moyens d'analyse électroniques comportant :
- une table des valeurs stockées des tensions de réception à la fréquence de travail de chaque ligne et de chaque colonne en l'absence d'appui ;
- des moyens de comparaison établissant, pour chaque ligne et pour chaque colonne, les écarts entre les valeurs mesurées des tensions de réception et les valeurs stockées des tensions de réception de façon à déterminer si les écarts mesurés sont représentatifs d'une ligne ou d'une colonne coupée et/ou d'un appui sur une ligne ou sur une colonne intacte ;
**caractérisé en ce que** lesdits moyens d'analyse électroniques comportent :
- des premiers moyens d'analyse agencés de façon que :
• si les tensions de réception de l'ensemble des lignes présentent un « creux » représentatif d'un appui et les tensions de réception de l'ensemble des colonnes ne présentent pas de « creux » représentatif d'un appui, une colonne est diagnostiquée coupée, les positions de ladite colonne en panne et de l'appui étant déterminées par la mesure des différences de tension de réception prises à la fréquence de travail et à la fréquence de discrimination des lignes situées au niveau dudit appui ;
• si les tensions de réception de l'ensemble des colonnes présentent un « creux » représentatif d'un appui et les tensions de réception de l'ensemble des lignes ne présentent pas de « creux » représentatif d'un appui, une ligne est diagnostiquée coupée, les positions de ladite ligne en panne et de l'appui étant déterminées par la mesure des différences de tension de réception prises à la fréquence de travail et à la fréquence de discrimination des colonnes situées au niveau dudit appui.

2. Dispositif à écran tactile selon la revendication 1, **caractérisé en ce que**, les moyens d'analyse comportent :
des seconds moyens d'analyse permettant de calculer, dans le cas de détection d'une ligne ou d'une colonne coupée, à partir des valeurs de tensions de réception à la fréquence de travail et à la fréquence de discrimination des lignes ou des colonnes situées au voisinage de la ligne ou de la colonne coupée les valeurs virtuelles de tension obtenues si la ligne ou si la colonne était intacte, lesdites valeurs virtuelles donnant des « creux virtuels » de tension ;
des troisièmes moyens d'analyse permettant de calculer le barycentre du « creux virtuel » de tension ;
des quatrièmes moyens d'analyse permettant de déterminer, à partir de la connaissance dudit barycentre, la position exacte de l'appui.

3. Dispositif à écran tactile selon l'une des revendications précédentes, **caractérisé en ce que** la fréquence de travail est comprise entre 100 kHz et 500 kHz et **en ce que** la fréquence de discrimination est comprise entre 500 kHz et 5 MHz.

## Patentansprüche

1. Berührungsbildschirmvorrichtung (1) mit projizierter kapazitiver Erfassung, die ein Matrix-Touchpad (10) mit mehreren leitenden Reihen (11) und leitenden Spalten (12) umfasst, wobei das Pad mit elektronischen Steuermitteln (20), die für jede leitende Reihe und jede leitende Spalte Emissionsspannungen (V_{IN}) erzeugen, und mit elektronischen Empfangs- und Analysemitteln (50) für von jeder leitenden Reihe und jeder leitenden Spalte kommenden Empfangsspannungen (V_{OUT}) verbunden ist,
wobei die elektronischen Steuermittel für jede leitende Reihe und jede leitende Spalte eine erste periodische Emissionsspannung, die auf einer ersten Frequenz (F_{MIN}), Arbeitsfrequenz genannt, gesendet wird, und eine zweite periodische Emissionsspannung erzeugt, die auf einer zweiten Frequenz (F_{MAX}), Unterscheidungsfrequenz genannt, gesendet wird, die sich von der ersten Frequenz unterscheidet:
wobei bei fehlendem Drücken der Wert der Arbeitsfrequenz niedrig genug ist, um sehr schwache Empfangsspannungsvariationen auf der Arbeitsfrequenz zu verursachen, und der Wert der Unterscheidungsfrequenz hoch genug ist, um erhebliche Empfangsspannungsvariationen in Abhängigkeit von den Reihen und Spalten auf der Unterscheidungsfrequenz zu verursachen;
wobei die Empfangs- und Analysemittel so ausgelegt sind, dass sie für jede Reihe und für jede Spalte den Wert einer ersten Empfangsspannung auf der Arbeitsfrequenz und den Wert einer zweiten Empfangsspannung auf der Unterscheidungsfrequenz ermitteln;
wobei die elektronischen Analysemittel Folgendes umfassen:
eine Tabelle der gespeicherten Werte der Empfangsspannungen auf der Arbeitsfrequenz für jede Reihe und für jede Spalte bei fehlendem Drücken;
Vergleichsmittel, um für jede Reihe und für jede Spalte die Differenzen zwischen den gemessenen Werten der Empfangsspannungen und den gespeicherten Werten der Empfangsspannungen festzustellen, um zu ermitteln, ob die gemessenen Differenzen eine unterbrochene Reihe oder Spalte und/oder ein Drücken auf eine intakte Reihe oder Spalte repräsentieren;
**dadurch gekennzeichnet, dass** die elektronischen Analysemittel Folgendes umfassen:
erste Analysemittel, so ausgelegt, dass:
• wenn die Empfangsspannungen des Satzes von Reihen eine "Vertiefung" haben, die ein Drücken repräsentiert, und die Empfangsspannungen des Satzes von Spalten keine "Vertiefung" haben, die ein Drücken repräsentiert, eine Spalte als unterbrochen diagnostiziert wird, wobei die Positionen der nicht-intakten Spalte und des Drückens anhand des Maßes von Empfangsspannungsdifferenzen ermittelt werden, die auf der Arbeitsfrequenz und auf der Unterscheidungsfrequenz der an dem Punkt des Drückens befindlichen Reihen ermittelt werden;
• wenn die Empfangsspannungen des Satzes von Spalten eine "Vertiefung" haben, die ein Drücken repräsentiert, und die Empfangsspannungen des Satzes von Reihen keine "Vertiefung" haben, die ein Drücken repräsentiert, eine Reihe als unterbrochen diagnostiziert wird, wobei die Positionen der nicht-intakten Reihe und des Drückens anhand des Maßes von Empfangsspannungsdifferenzen ermittelt werden, die auf der Arbeitsfrequenz und auf der Unterscheidungsfrequenz der Spalten ermittelt werden, die sich am Punkt des Drückens befinden.

2. Berührungsbildschirmvorrichtung nach Anspruch 1, **dadurch gekennzeichnet, dass** die Analysemittel Folgendes umfassen:
zweite Analysemittel, die eine Berechnung der virtuellen Spannungswerte beim Erkennen einer unterbrochenen Reihe oder Spalte auf der Basis der Empfangsspannungen auf der Arbeitsfrequenz und der Unterscheidungsfrequenz der Reihen oder Spalten zulassen, die sich in der Nähe der unterbrochenen Reihe oder Spalte befinden, wobei die virtuellen Spannungswerte dann erhalten werden, wenn die Reihe oder Spalte intakt war, wobei die virtuellen Werte "virtuelle Spannungsvertiefungen" erzeugen;
dritte Analysemittel, die das Berechnen des Baryzentrums der "virtuellen Spannungsvertiefung" zulassen;
vierte Analysemittel zum Ermitteln, auf der Basis der Kenntnis des Baryzentrums, der genauen Position des Drückens.

3. Berührungsbildschirmvorrichtung nach einem der vorherigen Ansprüche, **dadurch gekennzeichnet, dass** die Arbeitsfrequenz zwischen 100 kHz und 500 kHz liegt, und dadurch, dass die Unterscheidungsfrequenz zwischen 500 kHz und 5 MHz liegt.

## Claims

1. A touch screen device (1) with projected capacitive sensing, comprising a matrix touch pad (10) comprising a plurality of conducting rows (11) and of conducting columns (12), said pad being connected to electronic control means (20) generating, for each conducting row and each conducting column, emission voltages (V_{IN}), and to electronic reception and analysis means (50) for reception voltages (V_{OUT}) coming from each conducting row and each conducting column,
said electronic control means generating, for each conducting row and each conducting column, a first periodic emission voltage emitted at a first frequency (F_{MIN}), called working frequency, and a second periodic emission voltage emitted at a second frequency (F_{MAX}), called discrimination frequency, different from said first frequency:
in the absence of push-contact, the value of said working frequency is low enough to cause very weak variations in the reception voltages at said working frequency and the value of said discrimination frequency is high enough to cause significant variations in the reception voltages as a function of the rows and columns at said discrimination frequency;
said reception and analysis means are arranged so as to determine, for each row and for each column, the value of a first reception voltage at said working frequency and the value of a second reception voltage at said discrimination frequency;
said electronic analysis means comprising:
a table of the stored values of the reception voltages at the working frequency for each row and for each column in the absence of push-contact;
comparison means establishing, for each row and for each column, the differences between the measured values of the reception voltages and the stored values of the reception voltages so as to determine whether the measured differences represent an interrupted row or column and/or push-contact of an intact row or column;
**characterised in that** said electronic analysis means comprise:
first analysis means arranged so that:
• if the reception voltages of the set of rows have a "hollow" representing a push-contact and the reception voltages of the set of columns does not have a "hollow" representing a push-contact, a column is considered to be interrupted, the positions of said non-intact column and of the push-contact being determined by measuring reception voltage differences taken at said working frequency and at said discrimination frequency of the rows located at the point of said push-contact;
• if the reception voltages of the set of columns have a "hollow" representing a push-contact and the reception voltages of the set of rows do not have a "hollow" representing a push-contact, a row is considered to be interrupted, the positions of said non-intact row and of the push-contact being determined by measuring reception voltage differences taken at said working frequency and at said discrimination frequency of the columns located at the point of said push-contact.

2. The touchscreen device according to claim 1, **characterised in that** said analysis means comprise:
second analysis means allowing the computation of the virtual voltage values, when detecting an interrupted row or column, on the basis of the reception voltages at said working frequency and at said discrimination frequency of the rows or columns located in the vicinity of the interrupted row or column, which virtual voltage values are obtained if the row or column was intact, said virtual values providing "virtual voltage hollows";
third analysis means allowing the computation of the barycentre of the "virtual voltage hollow";
fourth analysis means for determining, on the basis of the knowledge of said barycentre, the exact position of the push-contact.

3. The touchscreen device according to any one of the preceding claims, **characterised in that** said working frequency is between 100 kHz and 500 kHz and **in that** said discrimination frequency is between 500 kHz and 5 MHz.
